Europäisches Patentamt

European Patent Office

Office européen des brevets

(19)

(11) Publication number: **0 156 941**
A2

(12) # EUROPEAN PATENT APPLICATION

(21) Application number: **84105307.7**

(22) Date of filing: **10.05.84**

(51) Int. Cl.⁴: **C 08 L 75/04,** C 08 G 18/66,
C 08 G 18/22, C 08 G 18/76

(30) Priority: **10.06.83 US 503001**

(43) Date of publication of application: **09.10.85**
**Bulletin 85/41**

(84) Designated Contracting States: **AT BE CH DE FR GB IT
LI NL SE**

(71) Applicant: **THE UPJOHN COMPANY, 301 Henrietta
Street, Kalamazoo, Michigan 49001 (US)**

(72) Inventor: **Ehrlich, Benjamin Shepard, 10 Williamsburg
Drive, Cheshire Connecticut (US)**
Inventor: **Georgacopoulos, Costas Nicholas,
45 Partridge Lane, Berlin Connecticut (US)**
Inventor: **Goldwasser, David Jay, 226 Eastgate Drive,
Cheshire Connecticut (US)**
Inventor: **Oertell, Richard William, III, 59 Edgewood
Drive, Guilford Connecticut (US)**
Inventor: **Recchia, Francesco Peter, 352 Yale Avenue,
New Haven Connecticut (US)**

(74) Representative: **Henkel, Feiler, Hänzel & Partner,
Möhlstrasse 37, D-8000 München 80 (DE)**

(54) **Polyurethane plastics with improved impact resistance.**

(57) Engineering plastics obtained by reaction of an organic
polyisocyanate, a low molecular weight extender and from
about 2 to 25 percent by weight, based on total weight of
reactants, of an isocyanate-reactive material (e. g. a polyol)
show a tendency to lose their normally high level of impact
resistance upon molding under certain conditions. This ten-
dency is particularly evident in the molding of parts having
relatively small thickness. It has been found that this ten-
dency can be overcome by increasing the level of urethane
catalyst (organometallic catalysts preferred) employed in
the preparation of said plastics and, at the same time,
incorporating into said plastics a minor amount of an incom-
patible polymeric impact modifier (particulate rubber
preferred). The increase in level of catalyst cannot be
tolerated in the absence of the impact modifier.

0156941

## BACKGROUND OF THE INVENTION

1.  Field of the Invention

This invention relates to polyurethane resins and is more particularly concerned with blends of polyurethane resins containing a minor amount of a second polymer which is incompatible therewith.

2.  Description of the Prior Art

Polyurethane resins, having properties which make them comparable to engineering thermoplastics such as nylon, have recently been described; see, for example, U.S. 4,376,834. These resins possess an impact strength of at least 0.054 kg.m/cm, and preferably at least 0.163 kg.m/cm of notch as measured by the notched Izod test (ASTM D256-56). They also possess high flexural modulus of at least about 10,546 $kg/cm^2$ as measured by ASTM-D790. Finally the resins are characterized by a heat deflection temperature of at least 50°C at 18.49 $kg/cm^2$. This latter characteristic is a measure of the resistance of the polymer to deformation by heat and represents the temperature at which deformation of a specimen of the polyurethane of predetermined size and shape occurs when subjected to a flexural load of the stated amount. The resins can be fabricated in any desired configuration for use as automobile body parts, equipment housings, mechanical goods, gears, gaskets and a wide variety of other such articles which require the high impact resistance and other properties possessed by the resins. The methods of fabrication can be any of those known in the art of molding thermoplastic polyurethane resins. Such methods include reaction injection molding, injection molding, extrusion, blow molding, calendering, thermoforming and the like.

It has been found in practice that, under certain molding conditions and or in the molding of articles having particular types of configuration, there is a tendency for the above type of resin to suffer loss of impact resistance, which loss appears to be related to reduction in molecular weight of the resin during the molding process. Attempts to overcome this tendency by increasing the level of catalyst employed in the preparation of the resin resulted in loss of impact resistance and a change in morphology of the resulting resin. However, it has now been found that, by increasing the catalyst level and at the same time incorporating a minor amount of an incompatible impact modifier into the above resins, it is possible to overcome the tendency to lose impact resistance under molding conditions or using mold configurations which previously gave rise to the above described problems. At the same time it was found that none of the other desirable properties suffered as a result of the modification of the catalyst level and the introduction of the impact modifier.

While the use of impact modifiers in cooperation with polymers is well recognized in the art it is believed to be surprising to find that the impact modifiers could be used in the present context to offset the deleterious effects of increase in catalyst level on the properties of the polyurethane resins described above.

## SUMMARY OF THE INVENTION

This invention comprises polymer blends which are characterized by high impact resistance, high flexural modulus and a heat deflection temperature of at least 50°C at 18.49 kg/cm$^2$, said blends comprising

    (a)    from 2 to 20 parts by weight, per 100 parts by weight of blend, of a polymeric impact modifier which is incompatible with the major component of the blend; and, as the balance of said blend,

    (b)    the product of reaction, in the presence of a urethane catalyst, of:

        (i)    an organic polyisocyanate;

        (ii)    at least one chain extender having a functionality from 2 to 3 and a molecular weight from about 50 to about 400; and

        (iii)    an isocyanate-reactive material having an average functionality of at least 1.9, a glass transition temperature (Tg) of less than 20°C, and a molecular weight in the range of about 500 to about 20,000;

wherein the proportion by weight of component (iii) based on total weight of all three components (i), (ii) and (iii) is from about 2 to about 25 percent and the overall ratio of isocyanate groups to active hydrogen groups in said components is in the range of about 0.95:1 to about 1.05:1.

The invention also comprises articles prepared from said polymer blends by molding processes conventional in the art.

## DETAILED DESCRIPTION OF THE INVENTION

The polymer blends of the invention can be prepared readily in any convenient manner. Illustratively, the polyurethane component (b) can be prepared in finished form and then admixed, preferably in a comminuted form such as powder or pellets, with the impact-modifier component (a) also preferably in comminuted form. The resulting mixture can be homogenized, if desired, by conventional means. Illustratively, when the polyurethane component (b) is thermoplastic, the mixture can be homogenized readily by melt extrusion.

The polymer blends of the invention can also be prepared by incorporating the impact modifier (a) into the reaction mixture which is used to prepare the polyurethane resin component (b). The incorporation is accomplished by adding the impact modifier to all the other reactants as they are being brought together and mixed. Alternatively, the impact modifier is preblended with one or other of the reactants and the dispersion of the impact modifier in said reactant or reactants is then added to the rest of the reactants. Where the polyurethane resin is being prepared using a continuous twin-screw reactor extruder, or like apparatus which can be utilized in a continuous process, the impact modifier (a) is conveniently added to the reaction mixture by introducing it, on a continuous basis and in the appropriate proportion, through the inlet port of the apparatus at the same time as the other reactants are being continuously fed thereto.

The proportions in which the impact modifier (a) and the polyurethane resin component (b) are admixed are advantageously such that the weight percent of the impact modifier in the resulting blend is in the range of about 2 to about 20 percent. Preferably the proportions are such that the impact modifier is present in the resulting blend in a proportion of about 2.5 to about 15 percent by weight, and, most preferably, in the proportion of about 3 to about 10 percent by weight.

The impact modifier (a) can be any of the polymers known in the art as impact modifiers. A particularly useful group of such modifiers comprises those which have been conventionally employed in the art to impart improved impact properties to polyvinyl chloride and related polymers; see, for example, Encyclopedia of Polymer Science and Technology, Vol. 14, p. 417-418, 1971, Interscience Publishers, New York. A preferred group of impact improvers are the particulate rubbery impact modifiers. Illustrative of such modifiers are acrylonitrile-butadiene-styrene terpolymers, methyl methacrylate-butadiene-styrene terpolymers, chlorinated polyethylenes, ethylene-vinyl acetate copolymers, vinyl chloride-ethylene-vinyl acetate graft polymers, polyethylene, copolymers of vinyl chloride with octyl acrylate or octyl fumarate, poly(alkyl acrylates), and the like. A particularly preferred group of impact modifiers for use in the blends of the invention is inclusive of poly(alkyl acrylates), methacrylate-butadiene-styrene copolymer rubbers and acrylonitrile-butadiene-styrene copolymer rubbers.

The polyurethane resin component (b) employed in the blends of the present invention can be thermoplastic or thermoset, although the advantages evidenced by the blends with component (a) are principally found when component (b) is thermoplastic. The polyurethane resin component (b) is prepared using procedures, reactants, and proportions of reactants which are described and exemplified in great detail in the aforesaid U.S. Patent 4,376,834, the disclosures of which are specifically incorporated herein by reference. The only departure from the teachings of this patent which is necessary in preparing the polyurethane resin components (b) for use in the blends of the present invention concerns the presence of catalyst in the reaction mixture. Thus the above patent indicates that the presence of catalyst is desirable but not essential. In the case of the polyurethane resins employed in the present invention the presence of the catalyst is essential and the nature of the catalyst and the level at which it is employed are important. Thus it is preferred that the urethane catalyst employed be fast acting by which is meant that it is capable of achieving a gel time of less than 20 seconds at 70°C when employed in preparing the polyurethane resin. Preferably the catalyst has a gel time of less than 10 seconds at 60°C and most preferably a gel time of less than 7 seconds at 50°C.

The organometallic catalysts which are known and used as catalysts in the polyurethane art are particularly suitable for use. Illustrative of such catalysts are the organometallic derivatives of bismuth, lead, tin, iron, antimony, uranium, cadmium, cobalt, thorium, aluminum, mercury, zinc, nickel, cerium, molybdenum, vanadium, copper, manganese and zirconium. Particularly preferred are the organotin catalysts such as stannous octoate, stannous oleate, dibutyltin octoate, dibutyltin dilaurate, dibutyltin diacetate, tributyltin laurylmercaptate, dibutyltin mercaptopropionate, dibutyltin didodecylmercaptide, dibutyltin

bis(isooctylthioglycolate), and the like. The catalysts are advantageously employed in an amount which is at least about 0.03 percent by weight of total reactants and preferably at least about 0.05 percent by weight of total reactants. The upper limit of level of catalyst is also important. In general the amount of catalyst should not exceed a level of about 0.5 percent by weight based on total weight of reactants and preferably should not exceed about 0.2 percent by weight based on total weight of reactants.

A detailed list of illustrative examples of the various organic polyisocyanates (i), chain extenders (ii) and isocyanate-reactive materials (iii) which can be employed in the preparation of the polyurethane resin component (b) is given in the aforesaid U.S. Patent 4,376,834 the disclosures of which have been incorporated herein by reference. A preferred group of organic polyisocyanates is that which comprises 4,4'-methylenebis- (phenyl isocyanate), mixtures of 4,4'-methylenebis(phenyl isocyanate) with up to about 70 percent by weight, based on total mixture, of the corresponding 2,4'-isomer, and the various modified forms of 4,4'-methylenebis(phenyl isocyanate) which are liquids at room temperature (circa 20°C). The latter products include the diisocyanate which has been reacted with a minor amount (up to about 0.2 equivalents per equivalent of polyisocyanate) of an aliphatic glycol or a mixture of aliphatic glycols; see U.S. Patents 3,394,164; 3,644,457; 3,883,571; 4,031,026; 4,115,429; 4,118,411; and 4,299,347. The liquid modified diisocyanates also include methylenebis- (phenyl isocyanates) which have been treated so as to convert a minor proportion of the diisocyanate to the corresponding carbodiimide which then interacts with further diisocyanate to form uretone-imine groups; see, for example, U.S. 3,384,653.

A preferred group of extenders which are employed in preparing the polyurethane resin components (b) comprises the lower aliphatic and cycloaliphatic glycols illustrative of which are 1,4-butanediol, 1,6-hexanediol, neopentyl glycol, 1,4-cyclohexanedimethanol and partial esters obtained by reacting either of the latter two glycols with from 0.01 to about 0.8 mole, per mole of glycol, of an aliphatic dicarboxylic acid such as adipic acid. Mixtures of any two or more of these extenders can also be employed.

While any of the isocyanate-reactive materials (iii) which are described in the aforesaid U.S. 4,376,834 can be utilized in the preparation of the polyurethane resin components (a) it is preferred to use polyether polyols and particularly propylene oxide-based polyethers including random and block copolymers of ethylene and propylene oxide of nominal functionality from about 2.0 to about 3.0, and polytetramethylene glycols of functionality greater than or equal to 2.0.

The isocyanate-reactive materials (iii) are generally employed in an amount within the range of about 2 to about 25 percent by weight based on total weight of reactants and preferably in the range of about 4 to about 18 percent by weight based on total weight of reactants.

The polymer blends of the invention can also incorporate various additives such as fillers, antioxidants, pigments, fire retardants, plasticizers, reinforcing agents and the like commonly employed in the art in such compositions.

The polymer blends of the invention retain all the valuable properties of the polyurethane resin components (a) which form the major part thereof and which render said resins useful as engineering plastics. However, the polymer blends of the invention are free from the tendency, shown by the polyurethane resin components when used alone, to exhibit significant loss of impact resistance when subjected to certain molding conditions particularly those which involve the preparation of articles having relatively small thickness in part or in whole. The incorporation of the impact modifier (a) enables one to increase the catalyst level employed in preparing the polyurethane resin component (b) to a level which cannot be tolerated, by reason of changes in morphology of the polymer, if the impact modifier is not also incorporated in the blend.

The following examples describe the manner and process of making and using the invention and set forth the best mode contemplated by the inventors of carrying out the invention but are not to be construed as limiting.

Example 1

A series of thermoplastic polyurethanes was prepared utilizing the following reactants and proportions in all cases except that the level of catalyst employed was varied as indicated in TABLE I below.

The reactants and proportions (by equivalents) employed were as follows:

|  | | Amt. (kilos) | Equiv. proportion |
|---|---|---|---|
| 4,4'-methylenebis- (phenyl isocyanate) | : | 269.82 | 0.999 |
| polyether polyol [polyoxyethylene-poly-oxypropylene triol: M.W. = 6500: SF6503: Texaco Chemical] | : | 34.8 | 0.007 |
| 1,6-hexanediol | : | 125.9 | 0.987 |
| octadecanol-1 | : | 3.05 | 0.005 |
| antioxidants | : | 1.73 | -- |
| wax lubricant | : | 1.30 | -- |

The procedure employed in the preparation of the polyurethanes was as follows.

The polyether polyol, 1,6-hexanediol, octadecanol-1, and the antioxidants and lubricant were blended, dried, and degassed by heating under vacuum for about 2 hrs. at 80-100°C. The blend was maintained at a temperature of 100°C and charged at a rate of 1.07 kg/minute to the inlet port of a Werner-Pfleiderer twin screw extruder-mixer. The diisocyanate was melted and maintained at a temperature of 55°C while being charged to the inlet port of the extruder-mixer at a rate such as to maintain the NCO/OH ratio of the mixed reactants at 1.0:1.0. The catalyst was added to the polymer blend stream as the latter was dispensed to the inlet port of the extruder. The finished polyurethane was extruded from the reactor in the form of a web which was cast on to a cooled conveyer belt and subsequently diced to form pellets. The pellets were dried for about 2 hours at 110°C before being injection molded to form flex bars of dimensions 127 x 12.7 x 6.35 mm and tensile bars (see ASTM D636) having a thickness of 3.17 mm. The test sheets were allowed to stand 24 hrs. at room temperature (22°C) before being subjected to the Notched Izod Impact test (ASTM D256-56) which is a recognized test for determination of impact resistance.

TABLE I records the test results so obtained and the nature and amount (percentage by weight based on total weight of reactants) of the catalyst employed in preparing the test samples. It will be seen that, in the case of all the samples, the impact resistance of the thinner (3.17 mm) samples was substantially lower than the thicker (6.35 mm) samples prepared from the same material. It will be seen further that increasing the proportion of catalyst gives rise to a significant reduction in the impact resistance, the decrease being particularly significant in the case of the thinner (3.17 mm) samples.

TABLE I

| Run No. | 1 | 2 | 3 | 4 | 5 |
|---|---|---|---|---|---|
| Catalyst:<br>% w/w | T-10[1]:<br>0.05 | T-10:<br>0.1 | T-10:<br>0.15 | T-10:<br>0.05<br>[2]T-12:<br>0.05 | T-10:<br>0.05<br>T-12:<br>0.10 |
| Notched Izod Impact (kg.m/cm): 3.17 mm | 0.29 | 0.17 | 0.15 | 0.18 | 0.15 |
| 6.35 mm | 1.0 | 0.81 | 0.76 | 0.96 | 0.89 |

1: Stannous octoate (50% solution in dioctylphthalate): M and T Chemical

2: Dibutyltin dilaurate: M and T Chemical

0156941

Example 2

Runs 1 and 3 of Example 1 were repeated exactly as described except that 22.99 kg. (5% by weight based on total reactants plus additives) of Acryloid KM 330 [an impact modifier believed to be poly(butylacrylate): Rohm and Haas Inc., Bulletin MR-108: Jan. 1980] was introduced into the inlet port of the twin screw extruder at a rate sufficient to maintain uniform proportion (5% by weight) with the other reactants being introduced simultaneously. The resulting products were diced, dried and molded into test sheets as described in Example 1. After allowing the parts to stand 24 hours at room temperature (circa 20°C) the molded sheets were subjected to the Notched Izod Impact test. The results are recorded in TABLE II below from which it will be seen that impact resistance of the materials at both sheet thicknesses was markedly improved compared with that of the unmodified samples from Runs 1 and 3 of Example 1.

TABLE II

| Run No. | | 6<br>[Modified Run 1] | 7<br>[Modified Run 3] |
|---|---|---|---|
| Notched Izod Impact (kg.m/cm) | : 3.17 mm | 1.18 | 0.93 |
| | 6.35 mm | 1.18 | 1.13 |

Example 3

Using the procedure described in Example 1 there was prepared a series of thermoplastic polyurethanes using the following reactants and proportions in all cases but varying the level and nature of the catalyst as recorded in TABLE III below.

| Reactant | | Amount | Equiv. proportion |
|---|---|---|---|
| 4,4'-methylenebis-(phenyl isocyanate) | : | 283.3 kg | 0.999 |
| polyether polyol[1] | : | 33.1 kg | 0.007 |
| 1,6-hexanediol | : | 132.2 kg | 0.987 |
| octadecanol-1 | : | 3.2 kg | 0.005 |
| antioxidants | : | 1.8 kg | -- |
| wax lubricant | : | 1.1 kg | -- |

1: polyoxyethylene-polyoxypropylene triol (20% E.O.):
   MW = 6000.

Each of the products so obtained was injection molded into test sheets of 3.17 mm and 6.35 mm thickness as described in Example 1 and the sheets were subjected to testing for physical properties. The results of the tests are recorded in TABLE III below. It will be seen that, for any given catalyst or catalyst combination, an increase in catalyst level causes a significant drop in the impact resistance [as measured by the Notched Izod Impact test] of the thinner (3.17 mm) samples without significantly affecting the other polymer properties.

## TABLE III

| Run No. | 8 | 9 | 10 | 11 | 12 |
|---|---|---|---|---|---|
| Catalyst: % w/w | T-10: 0.05 | UL-28[1]: 0.03 | UL-28: 0.05 | UL-28: 0.1 | UL-28: 0.03 T-10: 0.03 |
| **Physical Property** | | | | | |
| [2]Tensile Strength: $kg/cm^2$ x $10^3$ | 452 | 531.5 | 527.3 | 610.2 | 570.8 |
| at yield: $kg/cm^2$ x $10^3$ | 539.2 | 544.8 | 539.2 | 549 | 545.5 |
| [2]Elongation at break: % | 90 | 140 | 140 | 190 | 170 |
| Elongation at yield: % | 6.2 | 6.1 | 5.6 | 6.6 | 6.0 |
| Notched Izod Impact kg.m/cm: | | | | | |
| 3.17 mm | 0.27 | 0.51 | 0.27 | 0.19 | 0.19 |
| 6.35 mm | 0.80 | 0.83 | 0.95 | 0.90 | 0.91 |
| [3]Heat Deflection temp. [HDT] °C | | | | | |
| at 4.64 $kg/cm^2$ | 5.69 | 5.83 | 6.12 | 5.76 | 5.66 |
| at 18.49 $kg/cm^2$ | 4.99 | 4.92 | 5.27 | 5.13 | 5.17 |

1:  High performance organotin catalyst: Witco Chemical
    Company Bulletin 395, Jan. 1980.

2:  ASTM D638-68

3:  ASTM D648

Example 4

Runs 8, 11 and 12 of Example 3 were repeated exactly
as described except that 23.93 kg. (5% by weight based
on total reactants plus additives) of Acryloid KM 330
[see Example 2] was introduced into the inlet port of the
twin screw extruder at a rate sufficient to maintain
uniform proportion (5% by weight) with the other reactants
being introduced simultaneously.  The resulting products
were diced, dried and molded into test sheets as described
in Example 1.  The molded sheets (after postcuring at 22°C
for 24 hr.) were subjected to physical testing for physical
properties.  The results are recorded in TABLE IV below.

C156941
3983

It will be seen that, not only was the drop in impact strength caused by increasing the level of catalyst in Runs 8, 11 and 12 eliminated, but that the impact strength of these materials was markedly increased by introduction of the Acryloid KM 330.

TABLE IV

| Run No. | 13 [Modified Run 8] | 14 [Modified Run 11] | 15 [Modified Run 12] |
|---|---|---|---|
| Physical properties | | | |
| Tensile Strength: $kg/cm^2$ x $10^3$ | 541.3 | 513.9 | 520.2 |
| at yield: $kg/cm^2$ x $10^3$ | 486.5 | 478.7 | 480.1 |
| Elongation at break: % | 160 | 160 | 160 |
| Elongation at yield: % | 6.3 | 6.2 | 5.5 |
| Notched Izod Impact kg.m/cm: | | | |
| 3.17 mm | 1.08 | 1.08 | 1.05 |
| 6.35 mm | 1.18 | 1.11 | 1.01 |
| HDT °C: at 4.64 $kg/cm^2$ | 5.76 | 5.69 | 5.62 |
| at 18.49 $kg/cm^2$ | 4.88 | 4.99 | 5.13 |

Example 5

Samples of the thermoplastic polyurethane of Run 11 in Example 3 were physically blended with minor amounts of a number of different types of rubbery polymers using the following standard procedure.

The pelletized thermoplastic polyurethane (approximately 1.11 kg. per batch) and the rubber polymer (5% by weight based on total blend weight), in the form of powder or pellets, were blended together manually. The blend was fluxed through a single screw extruder, using a barrel and die temperature of 204 - 216°C, and was extruded as a single strand which was cooled and chopped into pellets. The pellets were then dried and injection molded to form test bars for the Notched Izod Impact test.

The identity of the various rubbery polymers used, and the Notched Izod impact results of the blends, are shown in TABLE V below. It will be seen that the impact resistance of the starting polyurethane of Run 11 was markedly improved by the blending. The reduction in impact caused by the increased catalyst level of the polyurethane was more than compensated by the blending.

TABLE V

| Rubbery polymer | Notched Izod Impact: kg.m/cm (3.17 mm) |
|---|---|
| [1]Epsyn E-901 | 0.51 |
| [2]Kane Ace B-56 | 1.17; 1.13* |
| [3]Blendex 336 | 1.07; 0.81* |
| [4]Krynac 25.65 | 0.68 |
| [5]KM-330 | 0.90 |
| [6]Krylene 1502 | 0.44 |

1: polyolefin EPDM rubber: Copolymer Rubber and Chemical Corp.

2: methacrylate-butadiene-styrene rubber: Kaneka America Corp.

3: ABS rubber: Borg-Warner Chemicals Inc.

4: acrylonitrile-butadiene rubber: Polysar Ltd.

5: see Example 2

6: styrene-butadiene rubber: Polysar Ltd.

*: obtained in duplicate run

Example 6

The experiments described in this Example serve to confirm the deleterious effect on impact strength of increasing the catalyst level in the polyurethane resins which form the major part of the blends of the present invention.

The thermoplastic resin employed as the starting material in the experiments in question was prepared using the procedure and reactants and proportions described in Example 3 with the following exceptions:-

(a)   the polyether polyol used in Example 3 was replaced by the polyether polyol used in Example 1 and the proportion by weight was reduced to 6 percent by weight based on total weight of reactants and additives.

    (b)    the catalyst used was stannous octoate (T-10) at a level of about 0.2 percent by weight based on total weight of reactants and additives.

The resulting resin was isolated as pellets in the manner described in Example 3.

Four aliquots each of 2000 g. from the material so obtained were taken and each was blended with a small amount (specific amounts shown in TABLE VI below) of a chelating compound (N,N'-di[2-(4-hydroxy-3,5-dialkyl-phenyl)propionyl]hydrazine) which latter material acts as a scavenger for the tin catalyst employed in making the polyurethane. The blending was accomplished by placing the two components in a plastic bag and shaking heartily for a short time. The blended materials were then injection molded to form test bars for the Notched Izod Test. A sample of the unblended polyurethane was also molded in identical fashion and used as a control. The amount of chelating agent used in each blend and the Notched Izod Impact results are shown in TABLE VI below. It will be seen that, as the amount of chelating agent was increased (i.e. as the amount of catalyst scavenged was increased and the level of active catalyst thereby reduced) the value of the impact resistance showed significant increase.

<div align="center">TABLE VI</div>

| % by weight of chelating agent | Notched Izod Impact kg.m/cm | |
|---|---|---|
| | 3.17 mm | 6.35 mm |
| 0 (control) | 0.16 | 0.32 |
| 0.05 | 0.21 | 0.89 |
| 0.075 | 0.50 | 0.96 |
| 0.1 | 0.81 | 1.02 |
| 0.4 | 0.94 | 0.86 |

0156941

## CLAIMS

1. A polymer blend characterized by high impact resistance, which property is maintained under processing and molding conditions, said blend comprising

    (a)    from 2 to 20 parts by weight, per 100 parts by weight of said blend, of a polymeric impact modifier which is incompatible with the major component of the blend; and, as the balance of said blend,

    (b)    the product of the reaction, in the presence of a urethane catalyst, of

        (i)    an organic polyisocyanate;

        (ii)    at least one chain extender having a functionality from 2 to 3 and a molecular weight from about 50 to about 400; and

        (iii)    an isocyanate-reactive material having an average functionality of at least 1.9, a glass transition temperature ($T_g$) of less than 20°C, and a molecular weight in the range of about 500 to about 20,000;

wherein the proportion by weight of component (iii) based on total weight of all three components (i), (ii) and (iii) is from about 2 to about 25 percent and the overall ratio of isocyanate groups to active hydrogen groups in said components is in the range of about 0.95:1 to about 1.05:1.

2. A polymer blend according to Claim 1 wherein said component (a) is a particulate rubber incompatible with component (b) and employed in an amount in the range of about 2.5 to about 15 percent by weight based on total weight of the blend.

3. A polymer blend according to Claim 2 wherein said component (a) comprises a poly(butylacrylate).

4. A polymer blend according to any of Claims 1-3 wherein the urethane catalyst employed to prepare said component (b) is an organometallic catalyst and is present in the reaction mixture in an amount from about 0.03 to about 0.5 percent by weight based on total reactants employed to prepare said component (b).

5. A polymer blend according to Claim 4 wherein the organometallic catalyst is an organotin compound.

6. A polymer blend according to any of Claims 1-5 wherein the amount of the isocyanate-reactive material (iii) which is employed to prepare the component (b) is from about 4 to about 18 percent by weight of said component (b).

7. A blend according to any of Claims 1-6 wherein the isocyanate-reactive material (iii) employed to prepare the component (b) comprises a polyether polyol.

8. A blend according to Claim 7 wherein the isocyanate-reactive material (iii) comprises a polyoxypropylene polyoxyethylene triol having a primary hydroxyl content of at least about 80 percent and a molecular weight in the range of about 2000 to about 20,000.

9. A blend according to any of Claims 1-8 wherein the organic polyisocyanate employed in the preparation of said component (b) is a diisocyanate selected from the group consisting of 4,4'-methylenebis(phenyl isocyanate), mixtures of 4,4'- and 2,4'-methylenebis(phenyl isocyanate) containing up to 70 percent by weight of the latter isomer, and modified forms of said diisocyanates which are liquid at about 20°C.

10. A blend according to Claim 1 wherein the chain extender employed in preparing component (b) is an aliphatic diol selected from 1,4-butanediol, 1,6-hexanediol, mixtures of 1,4-butanediol and neopentyl glycol, 1,4-cyclohexanedimethanol, mixtures of 1,4-cyclohexanedimethanol and 1,6-hexanediol and partial esters obtained by reacting 1 molar proportion of 1,4-cyclohexanedimethanol or neopentyl glycol with 0.01 to 0.8 mole of adipic acid.

CLAIMS

1.  A method for preventing loss of impact resistance during molding of an engineering plastic which has been obtained by reacting, in the presence of a urethane catalyst,

> (i) an organic polyisocyanate;
>
> (ii) at least one chain extender having a functionality from 2 to 3 and a molecular weight of from about 50 to about 400; and
>
> (iii) an isocyanate reactive material having an average functionality of at least 1.9, a glass transition temperature (Tg) of less than 20°C, and a molecular weight in the range of about 500 to about 20,000;

the proportion by weight of component (iii) based on total weight of reactants being from about 2 to about 25 percent and the overall ratio of isocyanate groups to active hydrogen groups in said reactants being in the range of about 0.95:1 to about 1.05:1; said method comprising incorporating into said engineering plastic, prior to molding thereof, from 2 to 20 parts by weight, per 100 parts by weight of the resulting mixture, of a polymeric impact modifier which is incompatible with the engineering plastic.

2.  A method according to Claim 1 wherein the polymeric impact modifier is a particulate rubber and is employed in an amount of about 2.5 to about 15 percent by weight based on total weight of the resulting mixture.

3.  A method according to Claim 2 wherein the particulate rubber is a poly(butylacrylate).

4.  A method according to any of Claims 1-3 wherein the catalyst employed in preparing the engineering plastic is an organometallic catalyst.

5.   A method according to Claim 4 wherein the organometallic catalyst is an organotin catalyst.

6.   A method according to any of Claims 1-5 wherein
the amount of the isocyanate-reactive material (iii)
employed in preparing the engineering plastic is from
about 4 to about 18 percent by weight based on total
weight of the reactants.

7.   A method according to any of Claims 1-6 wherein
the isocyanate-reactive material (iii) employed in
preparing the engineering plastic comprises a polyether
polyol.

8.   A method according to Claim 7 wherein the
isocyanate-reactive material (iii) comprises a
polyoxypropylene polyoxyethylene triol having a
primary hydroxyl content of at least about 80 percent
and a molecular weight in the range of about 2000 to
about 20,000.

9.   A method according to any of Claims 1-8 wherein
the organic polyisocyanate employed in preparing the
engineering plastic is a diisocyanate selected from
4,4'-methylenebis(phenyl isocyanate), mixtures of
4,4'- and 2,4'-methylenebis(phenyl isocyanate) containing up to 70 percent by weight of the latter
isomer, and modified forms of said diisocyanates
which are liquid at about 20°C.

10.  A method according to any of Claims 1-9 wherein
the chain extender employed in preparing the engineering
plastic is selected from 1,4-butanediol, 1,6-hexanediol,
mixtures of 1,4-butanediol and neopentyl glycol, 1,4-
cyclohexanedimethanol, mixtures of 1,4-cyclohexanedimethanol and 1,6-hexanediol and partial esters
obtained by reacting 1 molar proportion of 1,4-cyclohexanedimethanol or neopentyl glycol with 0.01 to 0.8 mole of adipic acid.